# EUROPEAN PATENT SPECIFICATION

(11) **EP 4 156 397 B1**
(45) Date of publication and mention of the grant of the patent: **11.02.2026**
(21) Application number: 21838206.7
(22) Date of filing: 06.07.2021
(51) Int. Cl.: H01M 50/30, H01M 50/325, H01M 50/116, H01M 50/543

(54) **SECONDARY BATTERY**
SEKUNDÄRBATTERIE
BATTERIE SECONDAIRE

(30) Priority: 10.07.2020 KR 20200085661
(43) Date of publication of application: 29.03.2023
(73) Proprietor: LG Energy Solution, Ltd., Seoul 07335 (KR)
(72) Inventor: LIM, Hun Hee, Daejeon 34122 (KR); KIM, Sang Hun, Daejeon 34122 (KR); KANG, Min Hyeong, Daejeon 34122 (KR); YU, Hyung Kyun, Daejeon 34122 (KR)
(74) Representative: Plasseraud IP
(86) International application number: PCT/KR2021/008602
(87) International publication number: WO 2022/010237

(56) References cited:
- EP-A1- 2 709 191
- EP-B1- 0 793 283
- AU-A1- 2016 372 041
- CN-U- 208 284 505
- JP-A- 2000 100 406
- JP-A- 2020 050 439
- JP-A- 2020 050 439
- KR-A- 20190 002 992
- KR-A- 20190 123 059
- US-A1- 2013 149 568
- DONBIN YANG: "Claim Coffee. Naver blog. Principle of Aroma Valve (Coffee Bean Packaging)", 17 October 2016 (2016-10-17), pages 1 - 6, XP055886299, Retrieved from the Internet <URL:https://blog.naver.com/claimcoffee/220838630575>

## Description

### CROSS-REFERENCE TO RELATED APPLICATION

The present application claims the benefit of the priority of Korean Patent Application No. 10-2020-0085661, filed on July 10, 2020.

### TECHNICAL FIELD

The present invention relate to a secondary battery.

### BACKGROUND ART

Secondary batteries are rechargeable unlike primarily batteries, and also, the possibility of compact size and high capacity is high. Thus, recently, many studies on secondary batteries are being carried out. As technology development and demands for mobile devices increase, the demands for secondary batteries as energy sources are rapidly increasing.

Rechargeable batteries are classified into coin type batteries, cylindrical type batteries, prismatic type batteries, and pouch type batteries according to a shape of a battery case. In such a secondary battery, an electrode assembly mounted in a battery case is a chargeable and dischargeable power generating device having a structure in which an electrode and a separator are stacked.

The electrode assembly may be approximately classified into a jelly roll type electrode assembly in which a separator is interposed between a positive electrode and a negative electrode, each of which is provided as the form of a sheet coated with an active material, and then, the positive electrode, the separator, and the negative electrode are wound, a stacked type electrode assembly in which a plurality of positive and negative electrodes with a separator therebetween are sequentially stacked, and a stack/folding type electrode assembly in which stacked type unit cells are wound together with a separation film having a long length.

Currently, as the energy density of the secondary battery increases, an amount of gas generated inside the secondary battery increases. In addition, solutions are needed because the secondary battery is bent due to the gas generation to cause defects.

In addition, the defect rate due to the gas generation is expected to be accelerated as the energy density of the secondary battery increases.

There is an issue in that the amount of moisture that is diffused from the outside while extracting the generated gas to the outside has to be minimized. When the moisture is permeated into the secondary battery, a side reaction occurs, resulting in deterioration in performance of the secondary battery and causing the generation of gas.

[Prior Art Document] (Patent Document) Korean Patent Publication No. 10-2014-0015647. JP2020 050439 A, US2013/149568 A1, AU 2016 372 041 A1, EP2709191 A1, EP0793283 B1 and JP 2000 100406 A each relate to batteries having safety valves to relieve internal pressure More specifically, EP 2 709 191 A1 discloses a secondary battery having a self-return type safety vent, the vent using a vent body being pressed against a gas release hole of a vent seat by a load bearing portion of a plane spring to tightly close the gas release hole.

### DISCLOSURE OF THE INVENTION

### TECHNICAL PROBLEM

One aspect of the present invention is to provide a secondary battery capable of discharging an internal gas while minimizing moisture permeated from the outside.

### TECHNICAL SOLUTION

A secondary battery according to claim 1 is provided in a first aspect.

A battery pack according to an embodiment of the present invention may comprise the secondary battery according to an embodiment of the present invention.

### ADVANTAGEOUS EFFECTS

According to the present invention, a valve may be connected through the connection pipe passing through the sealing part of the battery case to discharge the internal gas while minimizing the moisture permeated from the outside.

### BRIEF DESCRIPTION OF THE DRAWINGS

FIG. 1 is a plan view of a secondary battery according to an example useful for understanding of the disclosure.
FIG. 2 is a side view of the secondary battery according to the example.
FIG. 3 is a cross-sectional view taken along line B-B' of FIG. 1.
FIG. 4 is a perspective view of a connection pipe and an aroma valve in the secondary battery according to the example.
FIG. 5 is a cross-sectional view of the secondary battery according to the example.
FIG, 6 is a cross-sectional view of the aroma valve in the secondary battery according to the example.
FIG. 7 is a plan view of a secondary battery according to a second embodiment not forming part of of the present invention.
FIG. 8 is a cross-sectional view of an aroma valve in the secondary battery according to the second embodiment of the present invention.
FIG. 9 is an enlarged cross-sectional view of a region A of FIG. 8.
FIG. 10 is a plan view of the aroma valve in the secondary battery according to the second embodiment of the present invention.
FIG. 11 is a cross-sectional view taken along line A-A' of FIG. 10.
FIG. 12 is a plan view of a secondary battery according to a third embodiment forming part of the present invention.
FIG. 13 is a cross-sectional view of an aroma valve in the secondary battery according to the third embodiment of the present invention.

### MODE FOR CARRYING OUT THE INVENTION

The objectives, specific advantages, and novel features of the present invention will become more apparent from the following detailed description taken in conjunction with the accompanying drawings. It should be noted that the reference numerals are added to the components of the drawings in the present specification with the same numerals as possible, even if they are illustrated in other drawings. Also, the present invention may be embodied in different forms and should not be construed as limited to the embodiments set forth herein. In the following description of the present invention, the detailed descriptions of related arts which may unnecessarily obscure the gist of the present invention will be omitted.

### Secondary battery according to first example

References to the first embodiment should be read as examples not falling within the scope of the claimed invention.

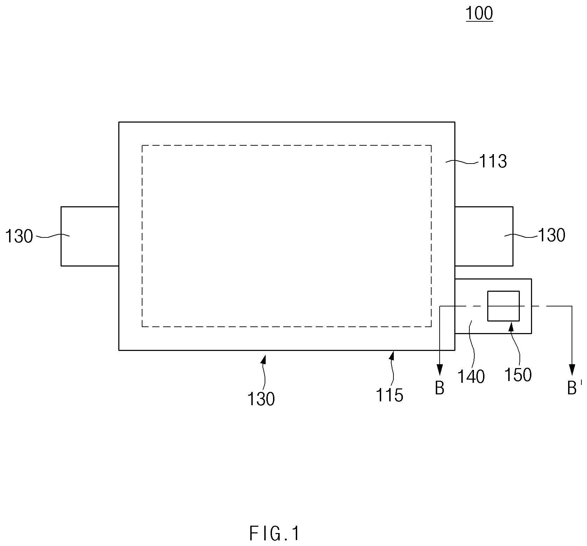

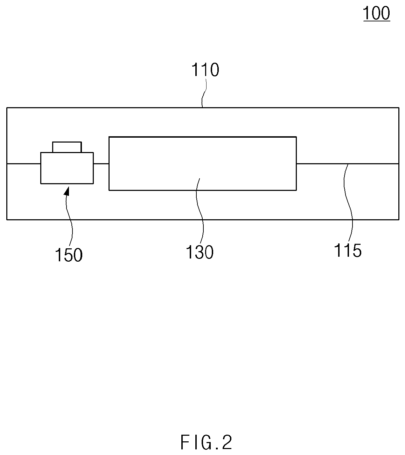

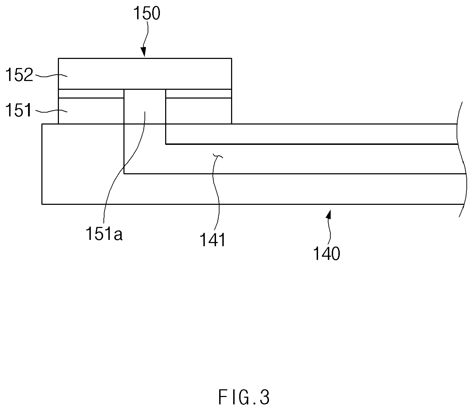

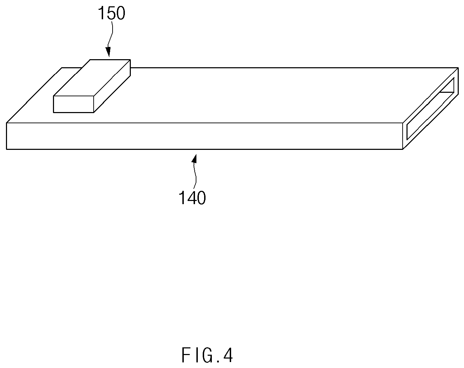

FIG. 1 is a plan view of a secondary battery according to a first embodiment of the present invention, FIG. 2 is a side view of the secondary battery according to the first embodiment of the present disclosure, FIG. 3 is a cross-sectional view taken along line B-B' of FIG. 1, and FIG. 4 is a perspective view of a connection pipe and an aroma valve in the secondary battery according to the first embodiment of the present disclosure.

Referring to FIGS. 1 to 4, a secondary battery 100 according to a first embodiment of the present disclosure comprises an electrode assembly 120, in which electrodes and separators are alternately stacked to be wound, a battery case 110, in which an accommodation part 114 accommodating the electrode assembly 120 is formed, a connection pipe 140 having one side connected to the accommodation part 114 of the battery case 110, and an aroma valve 150 connected to the other side of the connection pipe 140.

Hereinafter, the secondary battery according to the first embodiment of the present disclosure will be described in more detail.

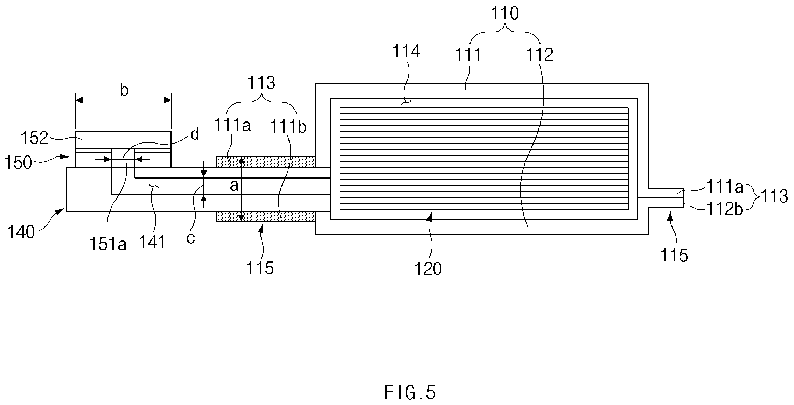

FIG. 5 is a cross-sectional view of the secondary battery according to the first embodiment of the present disclosure.

Referring to FIG. 5, the electrode assembly 120 may be a chargeable and dischargeable power generation element and have a structure in which the electrodes and the separators are combined and alternately stacked with respect to each other.

The electrodes may comprise a positive electrode 111 and a negative electrode . Also, the separator separates and electrically insulates the positive electrode 111 and the negative electrode from each other.

The positive electrode may comprise a positive electrode collector, a positive electrode active material portion that is an area on which a positive electrode active material is stacked on the positive electrode collector, and a positive electrode non-coating portion that is an area on which the positive electrode active material is not stacked. In this case, the positive electrode active material portion may form a positive electrode coating portion.

For example, the positive electrode collector may be provided as foil made of an aluminum material.

The positive electrode active material may comprise lithium manganese oxide, lithium cobalt oxide, lithium nickel oxide, lithium iron phosphate, or a compound or mixture containing at least one of the above-described materials.

The negative electrode may comprise a negative electrode collector, a negative electrode active material portion that is an area, on which a negative electrode active material is stacked on the negative electrode collector, and a negative electrode non-coating portion that is an area on which the negative electrode active material is not stacked. In this case, the negative electrode active material portion may form a negative electrode coating portion.

For example, the negative electrode collector may be provided as foil made of a copper (Cu) or nickel (Ni) material.

The negative electrode active material may comprise synthetic graphite, lithium a metal, a lithium alloy, carbon, petroleum coke, activated carbon, graphite, a silicon compound, a tin compound, a titanium compound, or an alloy thereof. Here, the negative electrode active material may further comprise, for example, non-graphite-based SiO (silica) or SiC (silicon carbide).

The separator may be made of an insulating material to insulate the positive electrode and the negative electrode from each other.

Also, the separator may be, for example, a multilayered film produced by microporous polyethylene, polypropylene, or a combination thereof or a polymer film for solid polymer electrolytes or gel-type polymer electrolytes such as polyvinylidene fluoride, polyethylene oxide, polyacrylonitrile, or polyvinylidene fluoride hexafluoropropylene copolymers.

Referring to FIG. 1, the secondary battery 100 according to the first embodiment of the present disclosure may further comprise an electrode lead 130 electrically connected to the electrode assembly 120. The electrode lead 130 has one side connected to the electrode and the other side extending to the outside of the battery case 110. Here, the electrode lead 130 may comprise a positive electrode lead connected to the positive electrode and a negative electrode lead connected to the negative electrode.

Referring to FIGS. 1 and 5, in the battery case 110, an accommodation part 114 in which the electrode assembly 120 is accommodated is formed, and a sealing part 115 is formed along an outer circumferential surface 113. Here, a thickness a of the sealing part 115 may be, for example, 10 mm or less. In this case, the thickness a of the sealing part 115 may be, specifically, for example, 1 mm or less.

Also, the battery case 110 may comprise an upper case 111 and a lower case 112.

Each of surfaces facing each other on outer circumferential surfaces 111a and 112a of the upper case 111 and the lower case 112 may comprise a polypropylene (PP) material. Here, the sealing part 115 may apply heat and a pressure to the outer circumferential surfaces 111a and 112a of the upper case 111 and the lower case 112 so that the outer circumferential surfaces 111a and 112a are thermally fused to each other.

Referring to FIGS. 3 to 5, the connection pipe 140 may have one side connected to the accommodation part 114 of the battery case 110 and the other side connected to the outside of the battery case 110 and may pass through the sealing part 115 of the battery case 110.

In addition, the connection pipe 140 may pass between the outer circumferential surfaces 111a and 112a of the upper case 111 and the lower case 112 in the battery case 110, and an outer surface of the connection pipe 140 may be sealed together with the outer circumferential surfaces 111a and 112a of the upper case 111 and the lower case 112. Here, the connection pipe 140 has a discharge passage 141 connecting the accommodation part 114 of the battery case 110 to the aroma valve 150 therein so that an internal gas disposed in the accommodation part 114 of the battery case 110 moves to the aroma valve 150.

In addition, the connection pipe 140 may comprise a polypropylene (PP) material on an outer surface thereof. Here, the outer surface of the connection pipe 140 may be made of the PP material.

Thus, the outer surface of the connection pipe 140 may be made of the PP material, and as a result, when the outer circumferential surfaces 111a and 112a of the upper case 111 and the lower case 112 are sealed, smooth sealing may be performed to improve sealing property. That is, the surfaces facing each other between the connection pipe 140 and the outer circumferential surface 113 of the battery case 110 may be made of the same or similar material, and thus, the sealing may be possible and easy to realize significantly firm sealing.

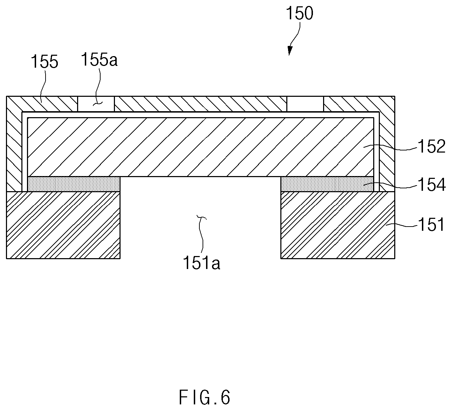

FIG, 6 is a cross-sectional view of the aroma valve in the secondary battery according to the first embodiment of the present invention. In FIG. 6, a cap 155 omitted in FIGS. 3 and 5 is further illustrated.

Referring to FIGS. 3 to 6, the aroma valve 150 may be connected to the other side of the connection pipe 140 and be disposed outside the battery case 110 so that, when an internal pressure of the battery case 110 is greater than or equal to a predetermined pressure, the aroma valve 150 is opened to discharge the internal gas. Here, the predetermined pressure may be, for example, a pressure greater than an internal pressure of a typical pouch battery and less than a bending pressure of the typical pouch battery. In this case, the predetermined pressure may be specifically, for example, 0.01 atmosphere (atm) or more. In addition, the predetermined pressure may be more specifically, for example, 0.05 atmospheres (atm) or more.

In addition, the aroma valve 150 may comprise, for example, a body 151 having an exhaust hole 151a formed therein, a cover 152 provided on an outer surface of the body 151 to cover the exhaust hole 151a, and an adhesive 154 provided between the cover 152 and the body 151 to allow the cover 152 and the body 151 to adhere to each other. In addition, for another example, the aroma valve 150 may further comprise a cap 155 on the outside of the cover 152 to prevent the cover 152 from being separated. In this case, a cap hole 155a may be formed in the cap 155 to facilitate discharge of a gas.

Thus, when the internal pressure of the battery case 110 increases to exceed adhesive force of the adhesive 154 that allow the body 151 and the cover 152 to adhere to each other, a space between the body 151 and the cover 152 may be opened to discharge the internal gas to the outside.

In addition, the aroma valve 150 may be provided vertically with respect to the connection pipe 140. Here, the exhaust hole 151a of the aroma valve 150 may extend vertically with respect to the internal discharge passage 141 of the connection pipe 140 formed in a longitudinal direction of the connection pipe 140. Thus, the aroma valve 150 may be disposed vertically with respect to the connection pipe 140 to maximally secure an air penetration area of the aroma valve 150. That is, when the aroma valve 150 is mounted in a direction parallel to the sealing part 115 having a narrow width and a long length, a limitation in which gas penetration characteristics are deteriorated may be overcome.

In this case, for example, a width d of the exhaust hole 151a of the aroma valve 150 may be greater than a width c of the discharge passage 141 of the connection pipe 140.

A width b of the aroma valve 150 may be formed to be 10 mm or more.

The adhesive 154 may comprise silicone oil.

The secondary battery 100 according to the first embodiment of the present disclosure configured as described above may comprise the aroma valve 150, through which a fluid flows in only one direction through the connection pipe 140 passing through the sealing part 115 of the battery case 110, to discharge the internal gas to the outside while minimizing an amount of moisture permeated from the outside.

In addition, the connection pipe 140 may be sealed together with the sealing part 115 disposed on the outer circumferential surface 113 of the battery case 110 that is sealed by applying heat, and the aroma valve 150 may be connected to the connection pipe 140, and thus, when the aroma valve 150 is installed to directly pass through the accommodation part 114, a portion of the battery case 110, which surrounds the accommodation part 114, may be prevented from being damaged by the heat.

### Secondary battery according to second embodiment

Hereinafter, a secondary battery according to a second embodiment, which also does not form part of the present invention, will be described.

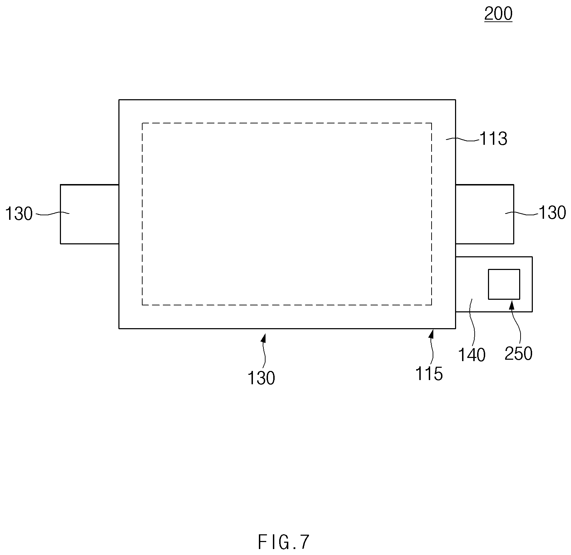

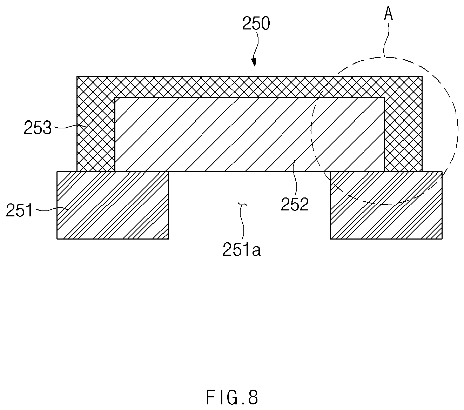

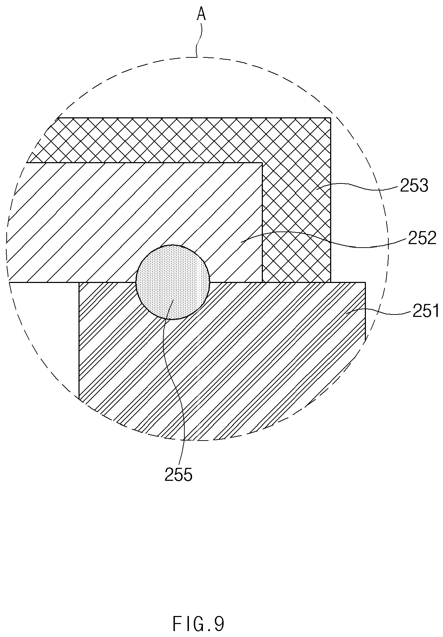

FIG. 7 is a plan view of a secondary battery according to a second embodiment of the present disclosure, FIG. 8 is a cross-sectional view of an aroma valve in the secondary battery according to the second embodiment of the present disclosure, and FIG. 9 is an enlarged cross-sectional view of a region A of FIG. 8.

Referring to FIGS. 7 to 8, a secondary battery 200 according to a second embodiment of the present disclosure comprises an electrode assembly, in which electrodes and separators are alternately stacked to be wound, a battery case 110, in which an accommodation part accommodating the electrode assembly is formed, a connection pipe 140 having one side connected to the accommodation part of the battery case 110, and an aroma valve 250 connected to the other side of the connection pipe 140.

The secondary battery 200 according to the second embodiment of the present disclosure is different from the electrode assembly according to the foregoing first embodiment described in a configuration of a valve 250. Thus, contents of this embodiment, which are duplicated with those according to the first embodiment, will be omitted or briefly described, and also, differences therebetween will be mainly described.

The connection pipe 140 may have one side connected to the accommodation part of the battery case 110 and the other side connected to the outside of the battery case 110 and may pass through the sealing part 115 of the battery case 110.

The connection pipe 140 may comprise a polypropylene (PP) material. Here, the outer surface of the connection pipe 140 may be made of the PP material. In this case, a surface facing the connection pipe 140 on an outer circumferential surface 113 of the battery case 110 may comprise the polypropylene (PP) material.

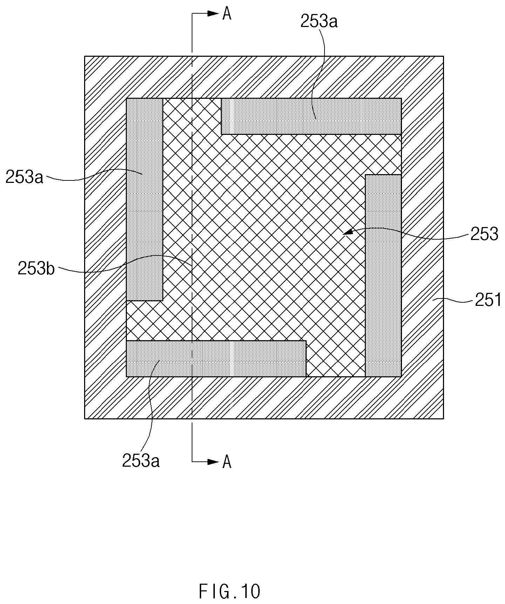

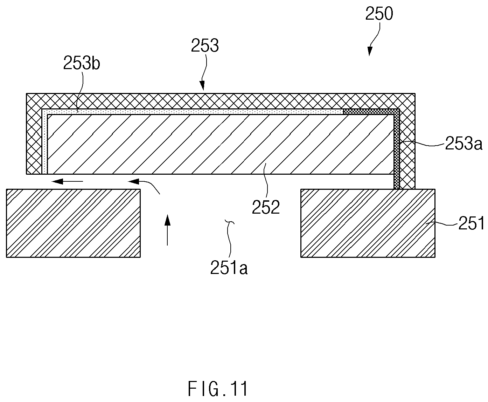

FIG. 10 is a plan view of the aroma valve in the secondary battery according to the second embodiment of the present disclosure, and FIG. 11 is a cross-sectional view taken along line A-A' of FIG. 10. Here, FIG. 11 exemplarily illustrates a state in which the aroma valve is opened. Also, FIG. 10 is a plan view when viewed from above in FIG. 11, and for convenience, a portion of an adhesive 253a is illustrated after removing an elastic member 253.

In more detail, referring to FIGS. 7 to 11, the aroma valve 250 may be connected to the other side of the connection pipe 140 and be disposed outside the battery case 110 so that, when an internal pressure of the battery case 110 is greater than or equal to a predetermined pressure, the aroma valve 150 is opened to discharge the internal gas.

In addition, the aroma valve 250 may comprises a body 251 having an exhaust hole 251a formed therein, a cover 252 provided on an outer surface of the body 251 to cover the exhaust hole 251a, and an elastic member 253 surrounding the cover 252 and having an end fixed to the body 251 to fix the cover 252 to the body 251 by elastic force thereof.

When an internal pressure of the battery case 110 is greater than the elastic force of the elastic member 253, the cover 252 and the body 251 may be spaced apart from each other, and the exhaust hole 251a may be opened to discharge an internal gas, and then, when the internal gas of the battery case 110 is lowered after discharging the internal gas, the cover 252 and the body 251 may be in close contact with each other by restoring force of the elastic member 253 so that the exhaust hole 251a is sealed.

The elastic member 253 may be made of a material comprising at least one or more of natural rubber, a poly-isoprene-based material, polyvinylidene fluoride (PVDF) (polyproplylene), polyvinyl fluoride (PVF), poly-3-hydroxybutrate (PHB), polyvinyl acetate (PVA), polychlorotrifluoroethylene (PCTFE), polyamide, polyactic acid, polyethylene terephthalate, polyvinylchloride, polyvinyl alcohol, polystyrene, poly methyl methacrylate (PMMA), polytetrafluoroethlene (PTFE), poly carbonate, polysulfone, and polynorbone.

The elastic member 253 may adhere to the outer surface of the cover 252. Here, a portion of the elastic member 253 may not adhere to form a passage through which the internal gas is discharged. Here, the elastic member 253 may comprise an adhesive part 253a adhering to the outer surface of the cover 252 and a non-adhesive part 253b that does not adhere to the outer surface of the cover 252. In this case, the non-adhesive part 253b may be formed along side and top surfaces of the cover 252 to form a passage through which a gas is discharged.

In addition, in the elastic member 253, an end of the adhesive part 253a may be fixed to the body 251, and an end of the non-adhesive part 253b may not be fixed to the body 251. That is, for example, the end of the adhesive part 253a may adhere to the body 251, and the end of the non-adhesive part 253b may not adhere to the body 251.

Therefore, when the internal pressure is greater than the elastic force of the elastic member 253, the cover 252 may move upward, and thus, the body 251 and the cover 252 are spaced apart from each other so that the internal gas is discharged from the exhaust hole 251a to the outside along the non-adhesive part 253b.

The aroma valve 250 may further comprise an O-ring 255 provided between the cover 252 and the body 251. Thus, sealing properties between the cover 252 and the body 251 may be significantly improved through the O-ring 255.

The aroma valve 250 may be provided vertically with respect to the connection pipe 140. Here, the exhaust hole 251a of the aroma valve 250 may extend vertically with respect to the internal discharge passage 141 of the connection pipe 140 formed in a longitudinal direction of the connection pipe 140.

### Secondary battery according to third embodiment forming part of the invention

Hereinafter, a secondary battery according to a third embodiment will be described.

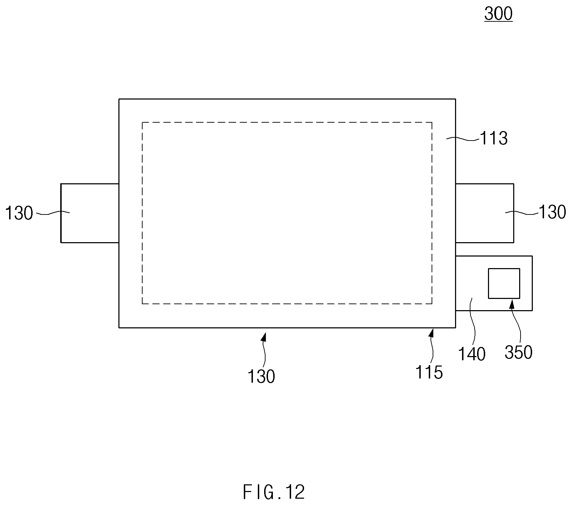

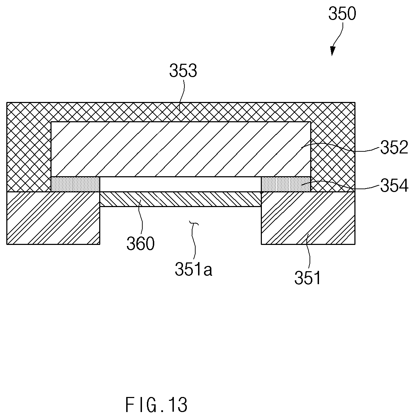

FIG. 12 is a plan view of a secondary battery according to a third embodiment forming part of the present invention, and FIG. 13 is a cross-sectional view of an aroma valve in the secondary battery according to the third embodiment forming part of the present invention.

Referring to FIGS. 12 to 13, an electrode assembly according to a third embodiment forming part of the present invention comprises an electrode assembly, in which electrodes and separators are alternately stacked to be wound, a battery case 110, in which an accommodation part accommodating the electrode assembly is formed, a connection pipe 140 having one side connected to the accommodation part of the battery case 110, and an aroma valve 350 connected to the other side of the connection pipe 140.

The secondary battery 300 according to the third embodiment forming part of the present invention is different from the secondary battery according to each of the foregoing first and second embodiments in a configuration of a valve 350. Thus, contents of this embodiment, which are duplicated with those according to the forgoing embodiment, will be omitted or briefly described, and also, differences therebetween will be mainly described.

In more detail, a connection pipe 140 has one side connected to the accommodation part of the battery case 110 and the other side connected to the outside of the battery case 110 and may pass through the sealing part 115 of the battery case 110.

The connection pipe 140 may comprise a polypropylene (PP) material. Here, the outer surface of the connection pipe 140 may be made of the PP material. In this case, a surface facing the connection pipe 140 on an outer circumferential surface 113 of the battery case 110 may comprise the polypropylene (PP) material.

The valve 350 is connected to the other side of the connection pipe 140 and is disposed outside the battery case 110 so that, when an internal pressure of the battery case 110 is greater than or equal to a predetermined pressure, the aroma valve 150 is opened to discharge the internal gas.

The aroma valve 350 comprises a body 351 having an exhaust hole 351a formed therein, a cover 352 provided on an outer surface of the body 351 to cover the exhaust hole 351a, an elastic member 353 surrounding the cover 352 and having an end fixed to the body 351 to fix the cover 352 to the body 351, and an adhesive 354 provided between the body 351 and the cover 352 to allow the cover 352 and the body 351 to adhere to each other.

When an internal pressure of the battery case 110 is greater than the elastic force of the elastic member 353, a space between the cover 352 and the body 351 may be opened to discharge an internal gas, and then, when the internal gas of the battery case 110 is lowered after discharging the gas, the space between the cover 352 and the body 351 may be sealed by restoring force of the elastic member 353.

The elastic member 353 may be made of a material comprising at least one or more of natural rubber, a poly-isoprene-based material, polyvinylidene fluoride (PVDF) (polyproplylene), polyvinyl fluoride (PVF), poly-3-hydroxybutrate (PHB), polyvinyl acetate (PVA), polychlorotrifluoroethylene (PCTFE), polyamide, polyactic acid, polyethylene terephthalate, polyvinylchloride, polyvinyl alcohol, polystyrene, poly methyl methacrylate (PMMA), polytetrafluoroethlene (PTFE), poly carbonate, polysulfone, and polynorbone.

The elastic member 353 may adhere to the outer surface of the cover 352. Here, a portion of the elastic member 353 may not adhere to form a passage through which the internal gas is discharged.

The adhesive 354 may comprise silicone oil. Thus, sealing properties between the cover 352 and the body 351 may be further improved. That is, the space between the cover 352 and the body 351 may be doubly sealed through the elastic member 353 and the adhesive 354 to significantly improve the sealing properties.

The aroma valve 350 may be provided vertically with respect to the connection pipe 140. Here, the exhaust hole 351a of the aroma valve 350 may extend vertically with respect to the internal discharge passage 141 of the connection pipe 140 formed in a longitudinal direction of the connection pipe 140.

The elastic member 353 may adhere to the outer surface of the cover 352. Here, a portion of the elastic member 353 may not adhere to form a passage through which the internal gas is discharged.

A membrane 360 through which a gas passes, and a liquid does not pass may be further provided on the exhaust hole 351a of the aroma valve 350. Thus, external moisture and air may be effectively prevented from being introduced into the secondary battery 300.

Here, the membrane 360 may be made of a hydrophobic material. Thus, the membrane 360 may have the size of the micropore and made of the hydrophobic material to allow the liquid to more well block the liquid without passing through the micropores.

A battery pack comprising any one or more of the secondary batteries according to the first to third embodiments of the present invention may be provided. The battery pack may be provided by electrically connecting the plurality of secondary batteries and accommodating the secondary batteries in a case.

While the present invention has been particularly shown and described with reference to exemplary embodiments thereof, it is to be understood that the scope of the present invention is not limited thereto. It will be understood by those of ordinary skill in the art that various changes in form and details may be made therein without departing from the spirit and scope of the present invention as defined in the appended claims.

Furthermore, the scope of protection of the present invention will be clarified by the appended claims.

### [Description of the Symbols]

100, 200, 300: Secondary battery
110: Battery case
111: Upper case
111a: Outer circumferential surface
112: Lower case
112a: Outer circumferential surface
113: Outer circumferential surface
114: Accommodation part
115: Sealing part
120: Electrode assembly
111: Positive electrode
112: Negative electrode
113: Electrode
114: Separator
130: Electrode lead
140: Connection pipe
141: Discharge passage
150, 250, 350: valve
151, 251, 351: Body
151a, 251a, 351a: Exhaust hole
152, 252, 352: Cover
154, 354: Adhesive
155: Cap
155a: Cap hole
253: Elastic member
253a: Adhesive part
253b: Non-adhesive part
255: O-ring
360: Membrane

## Claims

1. A secondary battery (300) comprising: an electrode assembly (120), in which electrodes (113) and separators (114) are alternately stacked; a battery case (110), in which an accommodation part accommodating the electrode assembly (120) is formed, and a sealing part (115) is formed along an outer circumferential surface thereof; a connection pipe (140) having one side connected to the accommodation part of the battery case (110) and the other side connected to the outside of the battery case (110) and passing through the battery case (110); and a valve (350) connected to the other side of the connection pipe (140) and disposed outside the battery case (110) so as to be opened to discharge an internal gas when an internal pressure of the battery case (110) is greater than or equal to a predetermined pressure, wherein the valve (350) comprises: a body (351) having an exhaust hole (351a) formed therein; a cover (352) provided on an outer surface of the body (351) to cover the exhaust hole (351a); and an elastic member (353) configured to surround the cover (352), wherein the elastic member (353) has an end fixed to the body (351) and fixes the cover (352) to the body by elastic force thereof, wherein the valve (350) further comprises an adhesive (354) provided between the body (351) and the cover (352) to allow the cover (352) to adhere to the body (351).

2. The secondary battery (300) of claim 1, wherein the connection pipe (140) comprises a polypropylene, PP material.

3. The secondary battery (300) of claim 2, wherein the battery case (110) comprises an upper case (111) and a lower case (112), each of surfaces facing each other on outer circumferential surfaces of the upper case (111) and the lower case (112) comprises a polypropylene, PP, material, the connection pipe (140) passes between the outer circumferential surfaces of the upper case (111) and the lower case (112), and an outer surface of the connection pipe (140) is sealed together with the outer circumferential surfaces of the upper case (111) and the lower case (112).

4. The secondary battery (300) of claim 1, wherein, when the internal pressure of the battery case (110) is equal to or greater than the elastic force of the elastic member (353), the cover (352) and the body (351) are spaced apart from each other so that the exhaust hole (351a) is opened to discharge the internal gas, and when the internal pressure of the battery case (110) is lowered after discharging the internal gas, the cover (352) and the body (351) are in close contact with each other by restoring force of the elastic member (353) so that the exhaust hole (351a) is sealed.

5. The secondary battery (300) of claim 1, wherein the elastic member (353) is made of a material comprising at least one or more of natural rubber, a poly-isoprene-based material, polyvinylidene fluoride, PVDF, polypropylene, polyvinyl fluoride, PVF, poly-3-hydroxybutrate, PHB, polyvinyl acetate, PVA, polychlorotrifluoroethylene, PCTFE, polyamide, polylactic acid, polyethylene terephthalate, polyvinylchloride, polyvinyl alcohol, polystyrene, poly methyl methacrylate, PMMA, polytetrafluoroethylene, PTFE, polycarbonate, polysulfone, and polynorborne.

6. The secondary battery (300) of claim 1, wherein the elastic member (353) adheres to an outer surface of the cover (352), wherein a portion of the elastic member (353) does not adhere to form a passage through which the internal gas is discharged.

7. The secondary battery (300) of claim 1, wherein the adhesive (354) comprises silicone oil.

8. The secondary battery (300) of claim 1, wherein the aroma valve extends orthogonally with respect to an internal discharge passage of the connection pipe and is formed in a longitudinal side of the connection pipe (140).

9. The secondary battery (300) of claim 1, wherein the exhaust hole (351a) of the valve (350) extends orthogonally with respect to an internal discharge passage of the connection pipe and is formed in a longitudinal side of an internal discharge passage of the connection pipe, which is formed in a longitudinal direction of the connection pipe (140).

10. The secondary battery (300) of claim 8, further comprising a membrane (360), through which a gas can pass, and a liquid cannot pass, on the exhaust hole (351a) of the valve (350).

## Patentansprüche

1. Sekundärbatterie (300) umfassend: eine Elektrodenanordnung (120), in welcher Elektroden (113) und Separatoren (114) abwechselnd übereinandergestapelt sind; ein Batteriegehäuse (110) in dem ein Aufnahmeteil ausgebildet ist das die Elektrodenanordnung (120) aufnimmt und ein Dichtungsteil (115) entlang einer äußeren Umfangsfläche davon ausgebildet ist; ein Verbindungsrohr (140) das eine Seite, die mit dem Aufnahmeteil des Batteriegehäuses (110) verbunden ist, und die andere Seite, die mit der Außenseite des Batteriegehäuses (110) verbunden ist, aufweist und durch das Batteriegehäuse (110) hindurchführt; und ein Ventil (350), das mit der anderen Seite des Verbindungsrohrs (140) verbunden ist und außerhalb des Batteriegehäuses (110) angeordnet ist, sodass es geöffnet werden kann um ein internes Gas abzugeben wenn ein Innendruck des Batteriegehäuses (110) größer oder gleich einem vorbestimmten Druck ist, wobei das Ventil (350) umfasst: einen Körper (351) mit einem Auslassloch (351a), das darin ausgebildet ist; eine an einer Außenfläche des Körpers (351) bereitgestellte Abdeckung (352) um das Auslassloch (351a) abzudecken; und ein elastisches Element (353), das dazu eingerichtet ist die Abdeckung (352) zu umgeben, wobei das elastische Element (353) ein Ende hat, das am Körper (351) befestigt ist und die Abdeckung (352) durch seine elastische Kraft am Körper fixiert, wobei das Ventil (350) ferner einen Klebstoff (354) umfasst, der zwischen dem Körper (351) und der Abdeckung (352) bereitgestellt ist, damit die Abdeckung (352) am Körper (351) haften kann.

2. Die Sekundärbatterie (300) nach Anspruch 1, wobei das Verbindungsrohr (140) ein Polypropylen, PP Material umfasst.

3. Die Sekundärbatterie (300) nach Anspruch 2, wobei das Batteriegehäuse (110) ein oberes Gehäuse (111) und ein unteres Gehäuse (112) umfasst, wobei jede der Oberflächen die auf äußeren Umfangsflächen des oberen Gehäuses (111) und des unteren Gehäuses (112) einander gegenüberliegen, ein Polypropylen, PP, Material umfasst, das Verbindungsrohr (140) zwischen den äußeren Umfangsflächen des oberen Gehäuses (111) und des unteren Gehäuses (112) hindurchführt, und eine Außenfläche des Verbindungsrohrs (140) zusammen mit den äußeren Umfangsflächen des oberen Gehäuses (111) und des unteren Gehäuses (112) versiegelt ist.

4. Die Sekundärbatterie (300) nach Anspruch 1, wobei, wenn der Innendruck des Batteriegehäuses (110) gleich oder größer als die elastische Kraft des elastischen Elements (353) ist, die Abdeckung (352) und der Körper (351) voneinander beabstandet sind, sodass das Auslassloch (351a) geöffnet ist um das interne Gas abzugeben, und, wenn der Innendruck des Batteriegehäuses (110) nach einem Abgeben des internen Gases gesenkt ist, die Abdeckung (352) und der Körper (351) durch eine Rückstellkraft des elastischen Elements (353) in engem Kontakt miteinander sind, sodass das Auslassloch (351a) versiegelt ist.

5. Die Sekundärbatterie (300) nach Anspruch 1, wobei das elastische Element (353) aus einem Material hergestellt ist, das mindestens eines oder mehrere von Kautschuk, einem Polyisopren-basierten Material, Polyvinylidenfluorid, PVDF, Polypropylen, Polyvinylfluorid, PVF, Poly-3-hydroxybutrat, PHB, Polyvinylacetat, PVA, Polychlortrifluorethylen, PCTFE, Polyamid, Polymilchsäure, Polyethylenterephthalat, Polyvinylchlorid, Polyvinylalkohol, Polystyrol, Polymethylmethacrylat, PMMA, Polytetrafluorethylen, PTFE, Polycarbonat, Polysulfon und Polynorborn umfasst.

6. Die Sekundärbatterie (300) nach Anspruch 1, wobei das elastische Element (353) an einer Außenfläche der Abdeckung (352) haftet, wobei ein Teil des elastischen Elements (353) nicht haftet, um einen Durchgang zu bilden, durch den das interne Gas abgegeben wird.

7. Die Sekundärbatterie (300) nach Anspruch 1, wobei der Klebstoff (354) Silikonöl umfasst.

8. Die Sekundärbatterie (300) nach Anspruch 1, wobei sich das Aromaventil orthogonal bezüglich eines internen Abgabeabschnitts des Verbindungsrohrs erstreckt und in einer Längsrichtung des Verbindungsrohrs (140) ausgebildet ist.

9. Die Sekundärbatterie (300) nach Anspruch 1, wobei sich das Auslassloch (351a) des Ventils (350) orthogonal bezüglich eines internen Abgabeabschnitts des Verbindungsrohrs erstreckt und in einer Längsrichtung eines internen Abgabeabschnitts des Verbindungsrohrs ausgebildet ist, das in einer Längsrichtung des Verbindungsrohrs (140) ausgebildet ist.

10. Die Sekundärbatterie (300) nach Anspruch 8, ferner umfassend eine Membran (360), durch die ein Gas passieren kann, und eine Flüssigkeit nicht passieren kann, am Auslassloch (351a) des Ventils (350).

## Revendications

1. Batterie secondaire (300) comprenant : un ensemble d'électrodes (120), dans lequel des électrodes (113) et des séparateurs (114) sont empilés alternativement ; un boîtier de batterie (110), dans lequel une partie de logement logeant l'ensemble d'électrodes (120) est formée, et une partie de scellement (115) est formée le long d'une surface circonférentielle externe de celui-ci ; un tuyau de raccordement (140) ayant un côté raccordé à la partie de logement du boîtier de batterie (110) et l'autre côté raccordé à l'extérieur du boîtier de batterie (110) et traversant le boîtier de batterie (110) ; et une soupape (350) raccordée à l'autre côté du tuyau de raccordement (140) et disposée à l'extérieur du boîtier de batterie (110) de manière à s'ouvrir pour évacuer un gaz interne lorsqu'une pression interne du boîtier de batterie (110) est supérieure ou égale à une pression prédéterminée, dans laquelle la soupape (350) comprend : un corps (351) ayant un orifice d'échappement (351a) formé en son sein ; un couvercle (352) disposé sur une surface externe du corps (351) pour recouvrir l'orifice d'échappement (351a) ; et un élément élastique (353) configuré pour entourer le couvercle (352), dans laquelle l'élément élastique (353) a une extrémité fixée au corps (351) et fixe le couvercle (352) au corps au moyen de sa force élastique, dans laquelle la soupape (350) comprend en outre un adhésif (354) disposé entre le corps (351) et le couvercle (352) pour permettre au couvercle (352) d'adhérer au corps (351).

2. Batterie secondaire (300) selon la revendication 1, dans laquelle le tuyau de raccordement (140) comprend un matériau en polypropylène, PP.

3. Batterie secondaire (300) selon la revendication 2, dans laquelle le boîtier de batterie (110) comprend un boîtier supérieur (111) et
un boîtier inférieur (112), chacune des surfaces faisant face à l'autre sur des surfaces circonférentielles externes du boîtier supérieur (111) et du boîtier inférieur (112) comprend un matériau en polypropylène, PP, le tuyau de raccordement (140) passe entre les surfaces circonférentielles externes du boîtier supérieur (111) et du boîtier inférieur (112), et une surface externe du tuyau de raccordement (140) est scellée avec les surfaces circonférentielles externes du boîtier supérieur (111) et du boîtier inférieur (112).

4. Batterie secondaire (300) selon la revendication 1, dans laquelle, lorsque la pression interne du boîtier de batterie (110) est supérieure ou égale à la force élastique de l'élément élastique (353), le couvercle (352) et le corps (351) sont espacés l'un de l'autre de sorte que l'orifice d'échappement (351a) soit ouvert pour évacuer le gaz interne, et lorsque la pression interne du boîtier de batterie (110) est abaissée après l'évacuation du gaz interne, le couvercle (352) et le corps (351) sont en contact étroit l'un avec l'autre sous l'effet de la force de rappel de l'élément élastique (353) de sorte que l'orifice d'échappement (351a) soit scellé.

5. Batterie secondaire (300) selon la revendication 1, dans laquelle l'élément élastique (353) est constitué d'un matériau comprenant au moins un ou plusieurs parmi les éléments suivants : caoutchouc naturel, matériau à base de polyisoprène, polyfluorure de vinylidène, PVDF, polypropylène, polyfluorure de vinyle, PVF, poly-3-hydroxybutyrate, PHB, polyacétate de vinyle, PVA, polychlorotrifluoroéthylène, PCTFE, polyamide, acide polylactique, polyéthylène téréphtalate, polychlorure de vinyle, alcool polyvinylique, polystyrène, polyméthacrylate de méthyle, PMMA, polytétrafluoroéthylène, PTFE, polycarbonate, polysulfone et polynorbornène.

6. Batterie secondaire (300) selon la revendication 1, dans laquelle l'élément élastique (353) adhère à une surface externe du couvercle (352), dans laquelle une partie de l'élément élastique (353) n'adhère pas pour former un passage à travers lequel le gaz interne est évacué.

7. Batterie secondaire (300) selon la revendication 1, dans laquelle l'adhésif (354) comprend une huile de silicone.

8. Batterie secondaire (300) selon la revendication 1, dans laquelle la soupape d'arôme s'étend orthogonalement par rapport à un passage d'évacuation interne du tuyau de raccordement et est formée dans un côté longitudinal du tuyau de raccordement (140).

9. Batterie secondaire (300) selon la revendication 1, dans laquelle l'orifice d'échappement (351a) de la soupape (350) s'étend orthogonalement par rapport à un passage d'évacuation interne du tuyau de raccordement et est formé dans un côté longitudinal d'un passage d'évacuation interne du tuyau de raccordement, qui est formé dans une direction longitudinale du tuyau de raccordement (140).

10. Batterie secondaire (300) selon la revendication 8, comprenant en outre une membrane (360), à travers laquelle un gaz peut passer, mais pas un liquide, sur l'orifice d'échappement (351a) de la soupape (350).
